# EUROPEAN PATENT SPECIFICATION

(11) **EP 0 900 000 B1**
(45) Date of publication and mention of the grant of the patent: **02.07.2003**
(21) Application number: 98905863.1
(22) Date of filing: 11.02.1998
(51) Int. Cl.: A01J 5/017, A01K 1/12

(54) **A METHOD OF MILKING ANIMALS**
VERFAHREN ZUM MELKEN VON TIEREN
PROCEDE DE TRAITE D'ANIMAUX

(30) Priority: 12.02.1997 NL 1005255
(43) Date of publication of application: 10.03.1999
(73) Proprietor: MAASLAND N.V., 3155 PD Maasland (NL)
(72) Inventor: VAN DEN BERG, Karel, NL-2971 BR Bleskensgraaf (NL)
(74) Representative: Corten, Maurice Jean F.M.
(86) International application number: PCT/NL98/00087
(87) International publication number: WO 98/035547

(56) References cited:
- EP-A- 0 309 036
- EP-A- 0 635 203
- GB-A- 2 218 888

## Description

The present invention relates to a method of milking animals according to the preamble of claim 1, in which a number of animals in particular goats is arranged side by side in a milking parlour.

There is known a method of automatically milking cows which are arranged behind each other in milk boxes that are adjacent to each other in longitudinal direction, in which method a robot arm construction is movable in longitudinal direction along the milk boxes, by means of which robot arm construction for each milk box a carrier with teat cups can be seized and be brought to under the udder of an animal, whereafter the teat cups can be connected one by one to the teats of the animal.

Another method milking cows using a robot arm construction which is moved along the rear of the animals to be milked is known from GB-2 218 888.

In particular for milking goats this method is rather time-consuming. The production time of the robot arm construction is defined by the cleaning of the teats and the connection of teat cups to the teats of animals. The robot arm construction serves two or at the most three milk boxes positioned behind each other in longitudinal direction.

In order to. make the method suitable for milking goats, the method according to the invention is characterized in that the robot arm construction is moved along the rear of the animals or that the section of the milking parlour where the animals are arranged is moved along the front of the robot arm construction for the purpose of seizing consecutively teat cups provided behind each of the animals arranged in the milking parlour and connecting same to the teats of the animals. In other words, it is not only possible to dispose the robot arm construction movably along the rear of the animals, but the animals may also be arranged in a movable carrousel which moves them along a rigidly disposed robot arm construction. In this manner, ten, twenty or even more goats can be arranged side by side, while, with the aid of the robot arm construction, teat cups can be connected consecutively to the teats of the goats. In this method, the position of the teats can be determined by means of a detector which sends its radiation between the hind legs to the udder of the animals. This detector is preferably fitted to the robot arm construction itself, more in particular at such a level that, when the robot arm construction is moved along the rear of the animals, the detector is capable of observing the two teats of the goats. Also the teat cups are connected to the teats between the hind legs of the animals.

In addition to a method of milking animals, the invention also relates to an implement for milking animals, in particular goats, in which the aforementioned method can be applied. In accordance with the invention, this implement is provided with a milking parlour in which the animals can be arranged side by side and a robot arm construction which is movable along the rear of the animals arranged in the milking parlour, to which robot arm construction there are connected seizing means for seizing teat cups provided behind each of the animals arranged in the milking parlour and for connecting same to the teats of the animals. The seizing means can be connected in particular with the robot arm construction so as to be pivotable about a pivotal axis and be movable in height under the animal's udder. In this situation, it is possible for the pivotal axis for the seizing means to extend horizontally at or near the upper side of the milking parlour in the longitudinal direction thereof, i.e. along the rear of the animals arranged side by side or above same. According to the invention, the movement of the robot arm construction in the longitudinal direction of the milking parlour can be realized by providing the robot arm construction with a support unit which is movable in the longitudinal direction of the milking parlour along one or more rails, relative to which support unit the pivotable portion of the robot arm construction is pivotable in sideward direction Y and consequently in forward and rearward direction relative to the animals arranged in the milking parlour. The support unit may be designed so as to be movable along the rails by motor drive. The sideward pivoting movement can be realized by means of an operating cylinder which is active between the support unit and the pivotable portion of the robot arm construction. By designing the pivotabie portion of the robot arm construction as a substantially downwardly extending carrier for the seizing means, it will be possible, by disposing an operating cylinder between the carrier and the seizing means, to realize the movability of the seizing means in height.

In a specific embodiment, the seizing means can additionally be connected with the robot arm construction so as to be rotatable about a substantially vertical pivotal axis. For the purpose of being able to determine the position of the teats of the animals, the seizing means may be provided with a detector for determining the position of the teats. In this situation the detector is fastened to the seizing means at such a level that, when the robot arm construction with the seizing means is moved along the rear of the animals, the detector is able to observe the position of the teats. Because the teats of the animals, in particular in case of a full udder, may rather often be orientated outwardly, it is of importance that the seizing means are provided with a seizing element that is pivotable about a substantially horizontal axis, so that, when by means of the seizing element a teat cup has been seized and brought to under the udder of the animal, the teat cup can be tilted to such an extent that it can easily be connected to a teat which is orientated somewhat outwardly. As already mentioned, the seizing means are capable of seizing the teat cups provided behind each of the animals in the milking parlour. In this situation it is advantageous when the teat cups are supported under pressure in a holder behind each of the animals arranged in the milking parlour. Each teat cup is capable of individually being taken from the holder and being connected to a teat of an animal present in the milking parlour. Preferably, each teat cup is additionally provided with withdrawing means for the purpose of being withdrawn into the holder after the milk flow has at least almost finished.

For the purpose of arranging the animals properly side by side in the milking parlour, in accordance with the invention the implement comprises turnstiles to be operated by the animals themselves, functioning such that, each time when an animal occupies a milk box, a partition for a next animal is being formed. Each milk box is preferably provided at its front side with a movable feed trough. This feed trough may be designed so as to be pivotable in upward direction, thus being able to constitute an exit of the milk box, which exit is released when the feed trough is pivoted upwards.

For a better understanding of the invention, reference will now be made to the accompanying drawings, in which:
Figure 1 shows schematically a plan view of a milking parlour in which goats can be arranged in two opposite rows;
Figure 2 shows a cross-section taken on the line II-II in Figure 1 of a milk box for a goat and therebehind the robot arm construction according to the invention, and

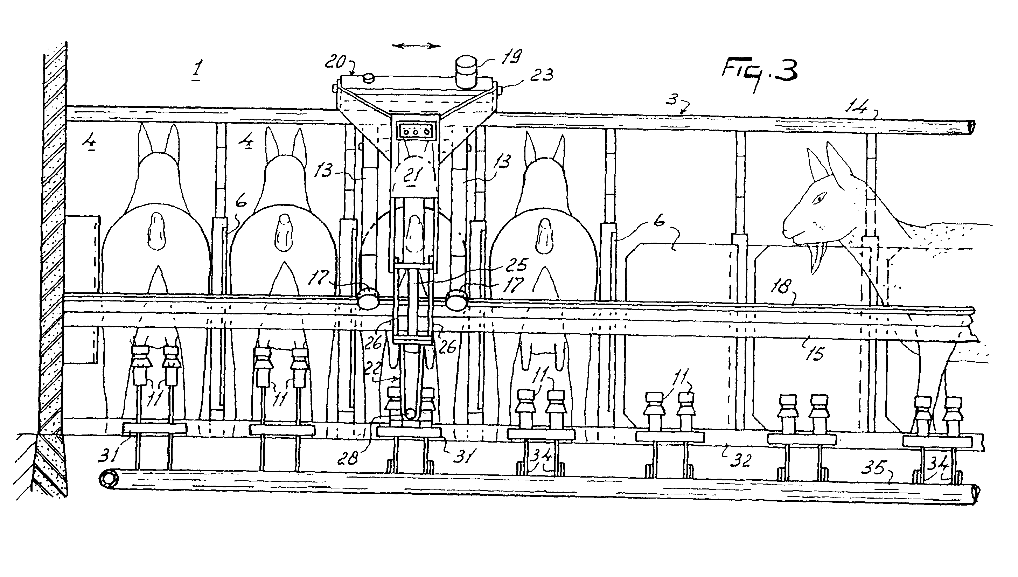

Figure 3 shows in a rear view a number of goats arranged side by side and the robot arm construction positioned behind one of these goats.

Corresponding parts in the drawings are indicated by the same reference numerals.

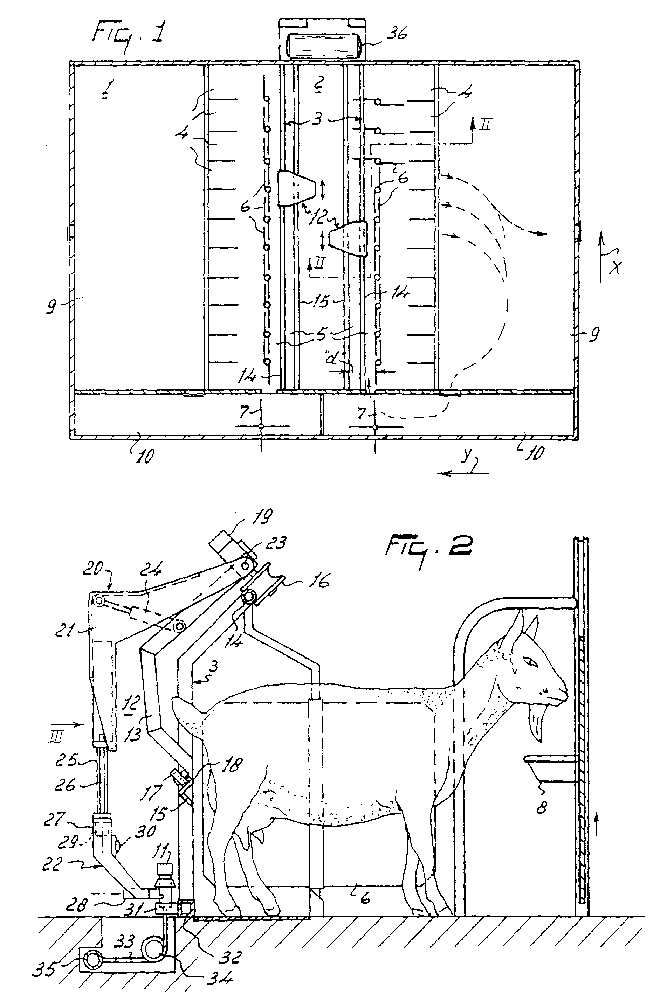

The milk box 1 shown in Figure 1 accomodates two rows of goats arranged side by side, which rows are separated by an alley 2. The alley 2 is confined on both sides by a fencing 3. On both sides of the alley 2 there are provided compartments for the goats. These compartments are indicated by the reference numeral 4. The compartments 4 are accessible to the goats via a walking passage 5 whose width is designated by "d". Said walking passage is confined at one side by the fencing 3 and at the other side by turnstiles 6. When a goat reaches the rearmost still available compartment via the walking passage 5 and enters this compartment, then the goat makes the turnstile 6 rotate, i.e. into a position in which it forms a partition relative to the adjacent compartment. In Figure 1 the turnstiles 6 of the rearmost three compartments of the right hand row of compartments are rotated into the position in which they form a partition between the compartments; the remaining turnstiles are in the position of rest, i.e. extend parallel to the relevant walking passage 5. When a goat leaves a compartment, the turnstile 6 reassumes the position in which it extends parallel to the relevant walking passage 5. At the entrance of each walking passage 5 there is provided a further turnstile 7 which comprises a counter for the purpose of admitting into the walking passage 5 a number of goats corresponding to the number of compartments 6. Each compartment is provided with a feed trough 8 at its front side, i.e. the side to which the head of a goat is directed when the latter is present in a compartment. The front side of the compartments including the feed trough 8 is capable of being flapped open or being flapped or slided upwards in such a manner that, by releasing the front side of a compartment, a goat is allowed to leave this compartment. As shown in Figure 1, the goats are then admitted into a section 9 from which they may go outside, if desired, or be led back, via a walking passage 10 and the further turnstile 7, to a walking passage 5 and subsequently to the compartments 4.

In the compartments 4 the goats are milked. To this end behind each compartment, immediately behind the fencing 3 in the alley 2, there are arranged two teat cups 11 which can be taken by a robot arm construction 12 and be connected to the two teats of the goats. Figure 1 shows two of such robot arm constructions 12. However, in what follows only one of the two robot arm constructions will be described in further detail.

The robot arm construction 12 is movable along the rear side of the compartments 4. To this end, the robot arm construction 12 comprises a support unit 13 which is movable along rails 14 and 15. The rail 14 is tube-like and disposed above the milking parlour 1 in the longitudinal direction X thereof while being supported by the fencing 3 and the frame of the turnstiles 6. The rail 15 is fitted to the fencing 3 at approximately half the height of the milking parlour. The rail 15 is constituted by an angle profile whose abutment face along which the support unit 13 can be moved is located outside the milking parlour at an angle of approximately 45° obliquely downwards relative thereto. Both at its upper and under side the support unit 13 comprises rollers 16 and 17. The rollers 16 and 17 are located perpendicular to each other and are fastened to the support unit 13 at an angle of approximately 45° relative to a vertical plane in the longitudinal direction X of the milking parlour in such a manner that the support unit 13 bears on the rail 14 by means of the rollers 16 and bears on the rail 15 by means of the rollers 17. In order to prevent the support unit 13 from being pushed from the rollers 16 and 17, there are provided locking means, e.g. in the form of an edge piece 18 fastened to the roller 17 or in the form of additional (non-shown) rollers, disposed diametrically opposite the rollers 16 relative to the rail 14, the latter extending consequently between the rollers. The support unit 13 can be moved along the rollers 16 and 17 by means of a motor 19.

The robot arm construction 12 is furthermore provided with a sidewardly pivotable portion 20 which comprises a substantially downwardly extending carrier 21 and seizing means 22 fastened thereto. The sidewardly pivotable portion 20 and consequently also the seizing means 22 are pivotable about a substantially horizontal pivotal axis 23 which is located at or near the upper side of the milking parlour in the longitudinal direction X thereof. The pivotal axis 23 and the centre line of the rail 14 are located in a substantially vertical plane.

In the embodiment described thus far, the sideward pivotability of the portion 20 is realized by means of an operating cylinder 24 which is active between said pivotable portion 20 and the support unit 13. As already mentioned, the sidewardly pivotable portion 20 comprises the carrier 21 and the seizing means 22. The seizing means 22 are connected with the carrier 21 so as to be movable in height by means of an operating cylinder 25. Parallel to this operating cylinder 25 there are provided two guide rods 26.

The seizing means 22 comprise a portion 27, extending obliquely downwards in the direction of the compartments, and a horizontal seizing element 28. By means of a motor 29 the seizing means 22 are rotatable about a downwardly orientated axis relative to the sidewardly pivotable portion 20, while the seizing element 28 is connected, rotatably about a substantially horizontal axis, with the obliquely downwardly extending portion 27 of the seizing means 22. With the aid of the seizing means 22 each time a teat cup 11 can be taken and be connected to a teat of a goat. Because of the movability of the seizing element 28, the seized teat cup can always be brought into a position or can always assume a position attuned to the orientation of the teats, so that the teat cups can always be connected to the teats. For the purpose of controlling the seizing means 22 a detector 30 is fastened thereto, by means of which detector the position of the teats can be determined. When an animal is present in the milking parlour and the teat cups 11 have to be connected, by means of the motor 19 the robot arm construction 12 first has to be moved in the longitudinal direction X of the milking parlour, i.e. in a position in which the seizing means 22 are pivoted entirely or almost entirely outside the walking passage 5 for the goats, in such a manner that by means of the operating cylinder 24 the seizing means 22 can be pivoted to under the animal into a position in which it is possible for the detector 30 to determine the position of the teats. After having been seized, a teat cup can be connected to a teat by means of the motor 29 and the operating cylinders 24 and 25. By moving the sidewardly pivotable portion 20 towards a goat, the detector 30 is able to observe the teats between the hind legs; naturally, for the purpose of being connected to the teats of a goat, also the teat cups are brought to under the udder of the goat between the hind legs.

In the position of rest, each of the teat cups 11 is arranged in a holder 31 which is rigidly connected with a horizontal beam 32 extending immediately above the floor between the fencing 3. Via an automatic rewinding device 34 the milk hose 33 is connected to a milk line 35 which, passing under the floor, is connected with a milk tank 36. By the automatic rewinding device 34 a teat cup 11 is kept under pressure in the holder. By the seizing means a teat cup is connected to a teat against this pressure. Because of the underpressure present in the teat, the teat cup remains connected thereto. The tractive force exerted by the automatic rewinding device has to be small relative to the suction force effected by this underpressure. When, after milking, the underpressure in the teat cup is removed, the teat cup is immediately drawn into its holder by the automatic rewinding device.

## Claims

1. A method of milking animals, in particular goats, in which a number of animals is arranged side by side in a milking parlour (1), thereafter a robot arm construction (12) is moved along the rear of the animals or the section of the milking parlour (1) where the animals have been arranged is moved along the front of the robot arm construction (12) **characterized in that** the robot arm construction seizes consecutively teat cups (11) provided behind each of the animals arranged in the milking parlour (1) and connects same to the teats of the animals.

2. A method as claimed in claim 1, **characterized in that** the position of the teats is determined by means of a detector (30) which sends its radiation between the hind legs to the udder of the animals.

3. A method as claimed in any one of claims 1 or 2, **characterized in that** the teat cups (11) are connected to the teats between the hind legs of the animals.

4. An implement for milking animals, in particular goats, in which the method as claimed in any one of the preceding claims can be applied, which implement is provided with a milking parlour (1) in which the animals can be arranged side by side and a robot arm construction (12) which is movable along the rear of the animals arranged in the milking parlour (1), **characterized in that** to the robot arm construction (12) there are connected seizing means (22) for seizing teat cups (11) provided behind each of the animals arranged in the milking parlour (1) and connecting same to the teats of the animals.

5. An implement as claimed in claim 4, **characterized in that** the seizing means (22) are connected with the robot arm construction (12) so as to be pivotable about a pivotal axis (23) and be movable in height under the animal's udder.

6. An implement as claimed in claim 5, **characterized in that** the pivotal axis (23) for the seizing means (22) extends substantially horizontally and is located at or near the upper side of the milking parlour (1) in the longitudinal direction X thereof.

7. An implement as claimed in any one of claims 5 or 6, **characterized in that** the robot arm construction (12) is provided with a support unit (13) which is movable in the longitudinal direction X of the milking parlour (1) along at least one rail (14, 15), relative to which support unit (13) the pivotable portion (20) of the robot arm construction (12) is pivotable in sideward direction Y and consequently in forward and rearward direction relative to the animals arranged in the milking parlour (1).

8. An implement as claimed in claim 7, **characterized in that** the support unit (13) is movable along two rails (14, 15) fitted at different levels to the fencing (3) of the milking parlour (1).

9. An implement as claimed in claim 7 or 8, **characterized in that** there are provided rollers (16, 17) by means of which the support unit (13) is movable along the rails (14, 15).

10. An implement as claimed in any one of claims 7 to 9, **characterized in that** the support unit (13) is movable along the rails (14, 15) by motor drive.

11. An implement as claimed in any one of claims 7 to 10, **characterized in that** the sidewardly pivotable portion (20) of the robot arm construction (12) is pivotable in sideward direction Y relative to the milking parlour (1) by means of an operating cylinder (24) disposed between said pivotable portion (20) and the support unit (13).

12. An implement as claimed in any one of claims 5 to 11, **characterized in that** the robot arm construction (12) comprises a substantially downwardly extending carrier (21) for the seizing means (22), which carrier (21) is pivotable about the pivotal axis (23).

13. An implement as claimed in claim 12, **characterized in that** the seizing means (22) are connected with the carrier (21) so as to be movable in height.

14. An implement as claimed in claim 12 or 13, **characterized in that** the seizing means (22) are movable in height relative to the carrier (21) by means of an operating cylinder (25) disposed between the robot arm and the carrier (21).

15. An implement as claimed in any one of claims 4 to 14, **characterized in that** the seizing means (22) are connected with the robot arm construction (12) so as to be rotatable about a substantially vertical pivotal axis.

16. An implement as claimed in any one of claims 4 to 15, **characterized in that** the seizing means (22) are provided with a detector (30) for determining the position of the teats.

17. An implement as claimed in any one of claims 4 to 16, **characterized in that** the seizing means (22) are provided with a seizing element (28) that is pivotable about a substantially horizontal axis (23).

18. An implement as claimed in any one of claims 4 to 17, **characterized in that** the teat cups (11) are supported under pressure in a holder (31) disposed behind each milk box (4) for an animal.

19. An implement as claimed in claim 18, **characterized in that** each teat cup (11) is capable of individually being taken from the holder (31) and being connected to a teat of an animal present in the relevant milk box (4).

20. An implement as claimed in claim 18 or 19, **characterized in that**, for the purpose of withdrawing a teat cup (11) into the holder (31) after the milk flow has at least almost finished, each teat cup (11) is provided with withdrawing means.

21. An implement as claimed in any one of claims 4 to 20, **characterized in that** the implement comprises turnstiles (6) to be operated by the animals themselves, functioning such that, each time when an animal occupies a milk box (4), a partition for a next animal is being formed.

22. An implement as claimed in any one of claims 4 to 21, **characterized in that** each milk box (4) is provided at its front side with a movable feed trough (8).

23. An implement as claimed in claim 22, **characterized in that** a feed trough (8) is pivotable upwards.

24. An implement as claimed in claim 22 or 23, **characterized in that** the feed trough (8) constitutes an exit of the milk box (4), which exit is released when the feed trough (8) is pivoted upwards.

## Patentansprüche

1. Verfahren zum Melken von Tieren, insbesondere von Ziegen, bei dem eine Anzahl von Tieren nebeneinander in einem Melkstand (1) angeordnet ist, worauf eine Roboterarmkonstruktion (12) an der Rückseite der Tiere entlangbewegt wird oder der Teil des Melkstandes (1), in dem die Tiere angeordnet sind, an der Vorderseite der Roboterarmkonstruktion (12) entlangbewegt wird,
**dadurch gekennzeichnet, daß** die Roboterarmkonstruktion Zitzenbecher (11), die hinter jedem der in dem Melkstand (1) angeordneten Tiere angebracht sind, nacheinander erfaßt und diese an die Zitzen der Tiere anschließt.

2. Verfahren nach Anspruch 1,
**dadurch gekennzeichnet, daß** die Position der Zitzen mittels eines Detektors (30) ermittelt wird, der seine Strahlen zwischen den Hinterbeinen auf das Euter der Tiere richtet.

3. Verfahren nach einem der Ansprüche 1 oder 2,
**dadurch gekennzeichnet, daß** die Zitzenbecher (11) zwischen den Hinterbeinen der Tiere an die Zitzen angeschlossen werden.

4. Vorrichtung zum Melken von Tieren, insbesondere von Ziegen, bei der das Verfahren nach einem der vorhergehenden Ansprüche anwendbar ist, wobei die Vorrichtung mit einem Melkstand (1) versehen ist, in dem die Tiere nebeneinander angeordnet werden können, und mit einer Roboterarmkonstruktion (12), die an der Rückseite der in dem Melkstand (1) angeordneten Tiere entlangbewegbar ist,
**dadurch gekennzeichnet, daß** mit der Roboterarmkonstruktion (12) Erfassungsvorrichtungen (22) verbunden sind, um Zitzenbecher (11), die hinter jedem der in dem Melkstand (1) angeordneten Tiere angebracht sind, zu erfassen und diese an die Zitzen der Tiere anzuschließen.

5. Vorrichtung nach Anspruch 4,
**dadurch gekennzeichnet, daß** die Erfassungsvorrichtungen (22) mit der Roboterarmkonstruktion (12) derart verbunden sind, daß sie um eine Schwenkachse (23) schwenkbar und unter dem Euter des Tieres höhenbewegbar sind.

6. Vorrichtung nach Anspruch 5,
**dadurch gekennzeichnet, daß** sich die Schwenkachse (23) für die Erfassungsvorrichtungen (22) im wesentlichen in horizontaler Richtung erstreckt und an oder nahe der Oberseite des Melkstandes (1) in dessen Längsrichtung X angeordnet ist.

7. Vorrichtung nach einem der Ansprüche 5 oder 6,
**dadurch gekennzeichnet, daß** die Roboterarmkonstruktion (12) mit einer Stützeinheit (13) versehen ist, die in Längsrichtung X des Melkstandes (1) auf mindestens einer Schiene (14, 15) bewegbar ist, wobei der schwenkbare Teil (20) der Roboterarmkonstruktion (12) relativ zu der Stützeinheit (13) in Seitwärtsrichtung Y und folglich relativ zu den in dem Melkstand (1) angeordneten Tieren nach vorn und hinten schwenkbar ist.

8. Vorrichtung nach Anspruch 7,
**dadurch gekennzeichnet, daß** die Stützeinheit (13) auf zwei Schienen (14, 15) bewegbar ist, die in unterschiedlicher Höhe an der Einfassung (3) des Melkstandes (1) angebracht sind.

9. Vorrichtung nach Anspruch 7 oder 8,
**dadurch gekennzeichnet, daß** Rollen (16, 17) vorgesehen sind, mittels derer die Stützeinheit (13) auf den Schienen (14, 15) bewegbar ist.

10. Vorrichtung nach einem der Ansprüche 7 bis 9,
**dadurch gekennzeichnet, daß** die Stützeinheit (13) durch motorischen Antrieb auf den Schienen (14, 15) bewegbar ist.

11. Vorrichtung nach einem der Ansprüche 7 bis 10,
**dadurch gekennzeichnet, daß** der seitwärts schwenkbare Teil (20) der Roboterarmkonstruktion (12) in Seitwärtsrichtung Y relativ zu dem Melkstand (1) mittels eines Arbeitszylinders (24) schwenkbar ist, der zwischen dem schwenkbaren Teil (20) und der Stützeinheit (13) angeordnet ist.

12. Vorrichtung nach einem der Ansprüche 5 bis 11,
**dadurch gekennzeichnet, daß** die Roboterarmkonstruktion (12) einen im wesentlichen nach unten gerichteten Träger (21) für die Erfassungsvorrichtungen (22) umfaßt, wobei der Träger (21) um die Schwenkachse (23) schwenkbar ist.

13. Vorrichtung nach Anspruch 12,
**dadurch gekennzeichnet, daß** die Erfassungsvorrichtungen (22) mit dem Träger (21) höhenbewegbar verbunden sind.

14. Vorrichtung nach Anspruch 12 oder 13,
**dadurch gekennzeichnet, daß** die Erfassungsvorrichtungen (22) relativ zu dem Träger (21) mittels eines Arbeitszylinders (25) höhenbewegbar sind, der zwischen dem Roboterarm und dem Träger (21) angeordnet ist.

15. Vorrichtung nach einem der Ansprüche 4 bis 14,
**dadurch gekennzeichnet, daß** die Erfassungsvorrichtungen (22) mit der Roboterarmkonstruktion (12) derart verbunden sind, daß sie um eine im wesentlichen vertikale Schwenkachse drehbar sind.

16. Vorrichtung nach einem der Ansprüche 4 bis 15,
**dadurch gekennzeichnet, daß** die Erfassungsvorrichtungen (22) mit einem Detektor (30) zur Ermittlung der Position der Zitzen versehen sind.

17. Vorrichtung nach einem der Ansprüche 4 bis 16,
**dadurch gekennzeichnet, daß** die Erfassungsvorrichtungen (22) mit einem Erfassungselement (28) versehen sind, das um eine im wesentlichen horizontale Achse (23) schwenkbar ist.

18. Vorrichtung nach einem der Ansprüche 4 bis 17,
**dadurch gekennzeichnet, daß** die Zitzenbecher (11) unter Druck in einem Halter (31) abgestützt sind, der hinter jeder Melkbox (4) für ein Tier angeordnet ist.

19. Vorrichtung nach Anspruch 18,
**dadurch gekennzeichnet, daß** jeder Zitzenbecher (11) einzeln von dem Halter (31) heruntergenommen und an eine Zitze eines in der betreffenden Melkbox (4) anwesenden Tieres angeschlossen werden kann.

20. Vorrichtung nach Anspruch 18 oder 19,
**dadurch gekennzeichnet, daß** jeder Zitzenbecher (11) mit Rückziehvorrichtungen versehen ist, um einen Zitzenbecher (11) in den Halter (31) zurückzuziehen, wenn der Milchfluß zumindest annähernd versiegt ist.

21. Vorrichtung nach einem der Ansprüche 4 bis 20,
**dadurch gekennzeichnet, daß** die Vorrichtung Drehtüren (6) umfaßt, die von den Tieren selbst zu betätigen sind und derart funktionieren, daß bei jedem Betreten einer Melkbox (4) durch ein Tier eine Trennwand für ein benachbartes Tier gebildet wird.

22. Vorrichtung nach einem der Ansprüche 4 bis 21,
**dadurch gekennzeichnet, daß** jede Melkbox (4) an ihrer Vorderseite mit einem beweglichen Futtertrog (8) versehen ist.

23. Vorrichtung nach Anspruch 22,
**dadurch gekennzeichnet, daß** ein Futtertrog (8) hochschwenkbar ist.

24. Vorrichtung nach Anspruch 22 oder 23,
**dadurch gekennzeichnet, daß** der Futtertrog (8) einen Ausgang der Melkbox (4) bildet, der freigegeben wird, wenn der Futtertrog (8) nach oben geschwenkt wird.

## Revendications

1. Procédé de traite d'animaux, en particulier de chèvres, selon lequel un certain nombre d'animaux est placé côte à côte dans une salle de traite (1), par la suite un ensemble de bras de robot (12) se déplace à l'arrière des animaux ou la partie de la salle de traite (1) dans laquelle les animaux ont été placés est déplacée le long de la partie avant de l'ensemble de bras de robot (12), **caractérisé en ce que** l'ensemble de bras de robot saisit consécutivement des gobelets trayeurs (11) fournis derrière chacun des animaux placés dans la salle de traite (1) et les raccorde aux tétines des animaux.

2. Procédé selon la revendication 1, **caractérisé en ce que** la position des trayons est déterminée par l'intermédiaire d'un détecteur (30) qui envoie son rayon entre les pattes arrière sur le pis des animaux.

3. Procédé selon l'une quelconque des revendications 1 ou 2, **caractérisé en ce que** les gobelets trayeurs (11) sont raccordés aux trayons entre les pattes arrières des animaux.

4. Equipement pour traire des animaux, en particulier des chèvres, dans lequel le procédé revendiqué selon l'une quelconque des revendications précédentes peut être appliqué, ledit équipement est fourni avec une salle de traite (1) dans laquelle les animaux peuvent être placés côte à côte et un ensemble de bras de robot (12) pouvant se déplacer à l'arrière des animaux placés dans la salle de traite (1) **caractérisé en ce que** sur l'ensemble de bras de robot (12) sont raccordés des moyens de préhension (22) pour saisir les gobelets trayeurs (11) se trouvant derrière chacun des animaux placés dans la salle de traite (1) et connectant ceux-ci aux trayons des animaux.

5. Equipement selon la revendication 4, **caractérisé en ce que** les moyens de préhension (22) sont raccordés à l'ensemble de bras de robot (12) de façon à pouvoir pivoter autour d'un axe pivot (23) et se déplacer en hauteur sous le pis de l'animal.

6. Equipement selon la revendication 5, **caractérisé en ce que** l'axe pivot (23) pour les moyens de préhension (22) se déploie substantiellement horizontalement et est dirigé vers ou près de la partie supérieure de la salle de traite (1) dans le sens longitudinal X de celle-ci.

7. Equipement selon l'une quelconque des revendications 5 ou 6, **caractérisé en ce que** l'ensemble de bras de robot (12) est doté d'un élément support (13) qui est mobile dans le sens longitudinal X de la salle de traite (1) le long d'au moins un rail (14, 15) par rapport à cet élément support (13) la partie pivotante (20) de l'ensemble de bras de robot (12) pivote dans le sens latéral Y et par conséquent vers l'avant et vers l'arrière par rapport aux animaux placés dans la salle de traite (1).

8. Equipement selon la revendication 7 **caractérisé en ce que** l'élément support (13) peut se déplacer le long de deux rails (14, 15) fixés à différents niveaux à la barrière (3) de la salle de traite (1).

9. Equipement selon la revendication 7 ou 8, **caractérisé en ce qu'**il est équipé de roulettes (16, 17) au moyen desquelles l'élément support (13) peut se déplacer le long des rails (14, 15).

10. Equipement selon l'une quelconque des revendications 7 à 9, **caractérisé en ce que** l'élément support (13) se déplace le long de rails (14, 15) par un entraînement motorisé.

11. Equipement selon l'une des revendications 7 à 10, **caractérisé en ce que** la partie pivotant latéralement (20) de l'ensemble de bras de robot (12) pivote en sens latéral Y par rapport à la salle de traite (1) au moyen d'un cylindre de commande (24) disposé entre ladite partie pivotante (20) et l'élément support (13).

12. Equipement selon l'une quelconque des revendications 5 à 11 **caractérisé en ce que** l'ensemble de bras de robot (12) comporte un support se déployant substantiellement vers le bas (21) pour les moyens de préhension (22), ledit support (21) pivotant autour de l'axe pivot (23).

13. Equipement selon la revendication 12, **caractérisé en ce que** les moyens de préhension (22) sont raccordés au support (21) de façon à pouvoir se déplacer en hauteur.

14. Equipement selon la revendication 12 ou 13, **caractérisé en ce que** les moyens de préhension (22) se déplacent en hauteur par rapport au support (21) par l'intermédiaire d'un cylindre de commande (25) disposé entre le bras de robot et le support (21).

15. Equipement selon l'une quelconque des revendications 4 à 14, **caractérisé en ce que** les moyens de préhension (22) sont raccordés à l'ensemble de bras de robot (12) de façon à pouvoir s'orienter autour d'un axe pivot substantiellement vertical.

16. Equipement selon l'une quelconque des revendications 4 à 15 **caractérisé en ce que** les moyens de préhension (22) sont dotés d'un détecteur (30) pour déterminer la position des trayons.

17. Equipement selon l'une quelconque des revendications 4 à 16 **caractérisé en ce que** les moyens de préhension (22) sont dotés d'un élément de préhension (28) pouvant pivoter autour d'un axe substantiellement horizontal (23).

18. Equipement selon l'une quelconque des revendications 4 à 17 **caractérisé en ce que** les gobelets trayeurs (11) sont tenus sous pression dans un réceptacle (31) placé derrière chaque stalle de traite (4) pour un animal.

19. Equipement selon la revendication 18, **caractérisé en ce que** chaque gobelet trayeur (11) peut être extrait individuellement du réceptacle (31) et être raccordé à un trayon d'un animal se trouvant dans la stalle de traite appropriée (4).

20. Equipement selon la revendication 18 ou 19 **caractérisé en ce que**, dans le but d'extraire un gobelet trayeur (11) dans le réceptacle (31) une fois que l'écoulement du lait est presque terminé, chaque gobelet trayeur (11) est doté de moyens d'extraction.

21. Equipement selon l'une quelconque des revendications 4 à 20, **caractérisé en ce que** l'équipement comprend des portillons d'accès (6) étant actionnés par les animaux eux-mêmes, fonctionnant de façon à ce que, chaque fois qu'un animal se trouve dans une stalle de traite (4), une cloison de séparation pour un animal suivant se forme.

22. Equipement selon l'une quelconque des revendications 4 à 21, **caractérisé en ce que** chaque stalle de traite (4) comprend dans sa partie avant une auge mobile d'alimentation (8).

23. Equipement selon la revendication 22, **caractérisé en ce qu'**une auge d'alimentation (8) pivote vers le haut.

24. Equipement selon la revendication 22 ou 23, **caractérisé en ce que** l'auge d'alimentation (8) constitue une sortie de la stalle de traite (4), ladite sortie étant dégagée lorsque l'auge d'alimentation (8) pivote vers le haut.
